# EUROPEAN PATENT APPLICATION

(11) **EP 0 718 137 A1**
(43) Date of publication of application: **26.06.1996**
(21) Application number: 95203332.2
(22) Date of filing: 02.12.1995
(51) Int. Cl.: B60J 10/00

(54) **Seal comprising at least one section made of thermoplastic material**

(30) Priority: 23.12.1994 IT MI942628
(71) Applicant: EVERGOMMA S.r.l., Fusignano (Ravenna) (IT)
(72) Inventor: Gilotta, Rosario, Monza (Milano) (IT)
(74) Representative: Raimondi, Alfredo, Dott. Ing. Prof.

(57) **Abstract**

Seal (3) which is arranged between components different from one another and joined together, even where displaceable, and designed to prevent the passage of fluids between the said components, said seal being composed of at least one section (3a) made of material consisting of rubber mixtures and at least one section (4) made of thermoplastic material which are connected together so as to form a single component.

## Description

The present invention relates to a seal which is arranged between components different from one another and joined together, even where displaceable, and designed to prevent the passage of fluids between said components, said seal being composed of sections of material consisting of rubber mixtures and sections of thermoplastic material, connected together so as to form a single component.

In the art the need to insert seals when joining parts which are different from one another, even where mutually displaceable, is known.

More specifically, for example in the sector involving the assembly of glass panes and windows in particular for motor vehicles, the need to insert a seal between the perimetral edge of the glass and the frame supporting the latter is known.

In addition to ensuring the corresponding connection between glass and bodywork and both the air-tightness and water-tightness in all the weather conditions in which it is used, the seal must have an aesthetic function and allow any movements of the glass, for example for the opening of windows. In addition, the seal is required to absorb and dampen noise-generating vibrations.

It is also known of seals which are made with profiled parts consisting of special rubber mixtures, which, while performing the function for which they are designed, require complicated and costly manufacturing procedures since the continuous sections and the curved components connecting together the latter must be made using two different processing techniques with subsequent welding together inside the corresponding moulds.

With this technique it is also required to trim the profiled parts, in order to remove the burrs which remain after the joining operation, and clean periodically the moulds which tend to get dirty and accumulate deposits.

Profiled parts made entirely of thermoplastic material are also known, although this does not provide the finished product with the necessary elasticity for obtaining the aforementioned damping effect.

The technical problem which is posed, therefore, is that of providing a seal which, while retaining the elasticity characteristics necessary for damping the vibrations of the connected parts as well as the characteristics of air and water-tightness, can be manufactured easily and at a low cost, without the need for the onerous operations of trimming of the production burrs.

Within the scope of this problem, it is also the aim of the present invention to define a simplified process for the production of a seal for glass panes and the like.

These results are obtained by the present invention which envisages a seal comprising at least one section made of rubber-based material integrally fixed to at least one section made of thermoplastic material.

More particularly it is envisaged that said section of thermoplastic material should be of the elastomeric thermoplastic type.

Said seal is produced according to a process which comprises the following stages:
- feeding of the raw materials to a mixer;
- mixing of the raw materials so as to obtain the programmed mixture;
- checking of the parameters of the mixture;
- drawing of the mixture so as to obtain a continuous profiled part with a defined cross-section;
- cutting-to-length of the profiled part so as to obtain sections forming at least one section of the seal;
- feeding of the said drawn sections to a joining mould;
- feeding of the thermoplastic material to the same mould so as to form at least one thermoplastic section to be connected to the rubber section;
- moulding and welding of the section made of thermoplastic material to the section consisting of a rubber mixture;
- discharging of the finished product.

Further details can be obtained from the following description, with reference to the accompanying drawings, in which:
Figure 1 shows an exploded schematic view of a windscreen for a motor vehicle with an associated seal;
Figure 2 is an internal view of a detail of the seal according to the present invention;
Figure 3 shows a cross-section along the plane indicated by III-III in Figure 2;
Figure 4 is a flow diagram of the process according to the present invention.

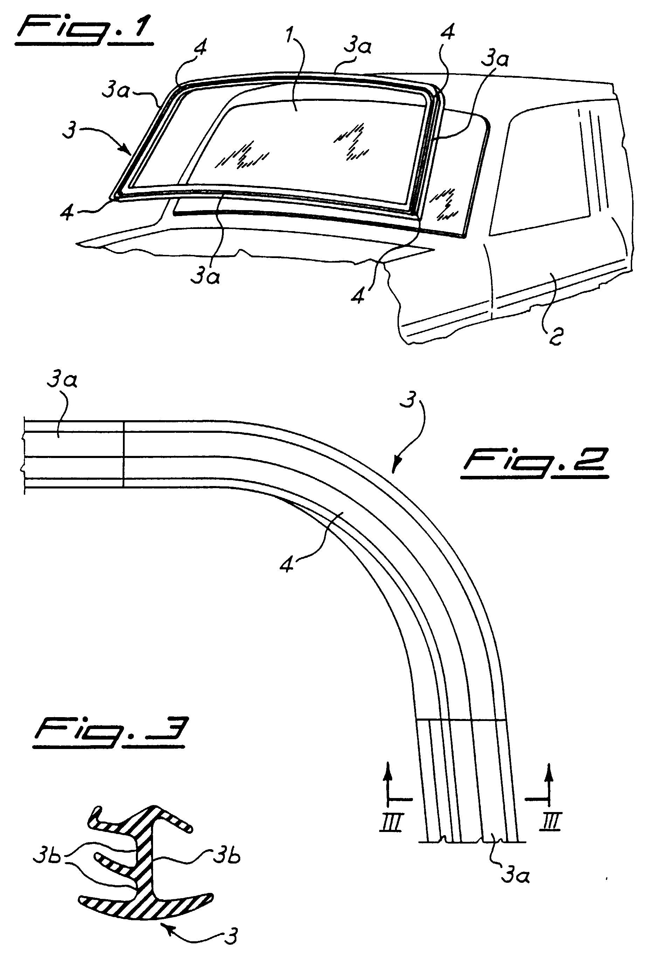

As shown in Figure 1, in order to apply a windscreen 1 to a motor vehicle 2, it is necessary to insert in between an air-tight and water-tight seal 3 made of suitable material which retains its characteristics in all the weather conditions to which it may be exposed.

Said seal 3 is composed essentially of four continuous sections 3a which, in the example shown in the figure, are substantially straight and connected by connecting pieces 4 which may have a curved shape or vertex with a more or less open angle.

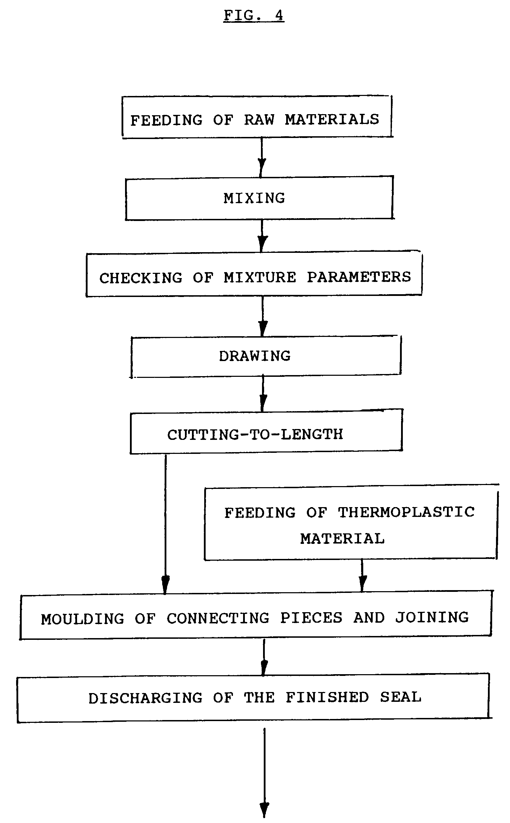

As shown in Figure 3, the profiled part has a cross-section defining seats 3b for joining to the frame on one hand and to the glass on the other hand.

Said continuous sections are made with rubber mixtures to which suitable fillers have been added in order to obtain the required elasticity suitable for ensuring the necessary flexibility and damping action during joining of the glass and frame in order to prevent chipping and/or breakage of the pane.

According to the present invention, it is envisaged moreover that the connecting sections 4 are made of elastomeric thermoplastic material with the following characteristics:
- Shore hardness factor of 45-95 A;
- elastic recovery of between 18 and 60% calculated using the ASTM 0395 method at ambient temperature and of between 40 and 80% when calculated using the same method at a temperature of 100°C;
- resistance to atmospheric agents, ozone and ultraviolet rays;
- working temperature of between -50 and + 120°C;
- adhesive force of the joint between the section made of EPDM (ethylene-propylene-diene monomer) and the connecting piece made of TPE (elastomeric thermoplastic) greater than or equal to 35 N.

Said connecting pieces 4, according to the invention, may be produced directly inside the mould in which joining with the straight sections is performed, as described more fully in the process for producing a seal according to the invention described below.

With reference to the flow diagram shown in Figure 4, the process according to the invention comprises the following stages:
- feeding of the raw materials to the mixer;
- mixing so as to obtain the programmed mixture;
- checking of the parameters of the mixture;
- drawing of the mixture so as to obtain a continuous profiled part with a defined cross-section;
- cutting-to-length of the profiled part so as to obtain the straight sections 3a of the seal 3;
- insertion of the straight sections into a joining mould;
- feeding via injection of the thermoplastic material to the mould itself so as to form sections 4 for connecting the straight sections;
- moulding and welding of the sections 4 for connecting to the corresponding straight sections 3a;
- emptying of the mould.

As can be seen, the process according to the invention makes it possible to provide a seal, eliminating the line which produces the mixture for the connecting pieces and drawing of the latter for feeding the moulds, making it possible moreover to eliminate maintenance of the latter according to the known art.

In addition, moulding of the thermoplastic material does not give rise to burrs or the like, making it possible to eliminate the stage of trimming of the joint, which is always required with seals of the known type following the stage of welding of the rubber sections to the associated connecting pieces.

Many variations may be introduced as regards the manufacture of the parts which make up the invention, without thereby departing from the protective scope of the present invention as defined in the claims which follow.

## Claims

1. Seal (3) which is arranged between components different from one another and joined together, even where displaceable, and designed to prevent the passage of fluids between the said components, characterized in that it is composed of at least one section (3a) made of material consisting of rubber mixtures and at least one section (4) made of thermoplastic material connected together so as to form a single component.

2. Seal according to Claim 1, characterized in that said section (4) made of thermoplastic material consists of elastomeric thermoplastic material.

3. Seal according to Claim 1, characterized in that said section (4) made of thermoplastic material has a Shore hardness factor of between 25 and 95 A if used for noise-suppression purposes.

4. Seal according to Claim 1, characterized in that it has a closed configuration with continuous sections (3a) made of rubber-based material connected by shaped sections (4) made of thermoplastic material.

5. Seal according to Claims 1 to 4, characterized in that said connecting sections (4) made of thermoplastic material have a Shore hardness factor of between 40 and 90 A.

6. Seal according to Claim 1, characterized in that said connecting pieces have an elastic flow factor at ambient temperature of between 18 and 60%.

7. Seal according to Claim 1, characterized in that said connecting pieces have an elastic flow factor at 100°C of between 40 and 80%.

8. Seal according to Claim 1, characterized in that the adhesive force between sections made of a rubber mixture and sections made of thermoplastic material is greater than or equal to 35 N.

9. Process for the production of a seal according to Claim 1, characterized in that it comprises the following stages:
- feeding of the raw materials to a mixer;
- mixing of the raw materials so as to obtain the programmed mixture;
- checking of the parameters of the mixture;
- drawing of the mixture so as to obtain a continuous profiled part with a defined cross-section;
- cutting-to-length of the profiled part so as to obtain sections (3a) forming at least one section of the seal (3);
- feeding of the said drawn sections (3) to a joining mould;
- feeding of the thermoplastic material to the same mould so as to form at least one thermoplastic section (4) to be connected to the rubber section;
- moulding and welding of the section (4) made of thermoplastic material to the section (3a) consisting of a rubber mixture;
- discharging of the finished product.

10. Process according to Claim 9, characterized in that the thermoplastic material is fed to the joining mould for injection in the molten state.
